# EUROPEAN PATENT APPLICATION

(11) **EP 1 209 432 A2**
(43) Date of publication of application: **29.05.2002**
(21) Application number: 01127368.7
(22) Date of filing: 21.11.2001
(51) Int. Cl.: F27B 9/30, F27D 19/00, F27D 17/00

(54) **Continuous kiln particularly for ceramic articles**

(30) Priority: 23.11.2000 IT MO000252
(71) Applicant: IFT S.r.l., 41100 Modena (IT)
(72) Inventor: Gerardi, Elio, 41100 Modena (IT)
(74) Representative: Modiano, Guido, Dr.-Ing.

(57) **Abstract**

A continuous kiln (1), particularly for ceramic articles, comprises a firing region provided with a plurality of burners (5), at least one of which is of the regenerative type with heat recovery of the exhaust gases of the firing region and is adapted to introduce in the firing region hot combustion gases and to aspirate from the firing region the exhaust gases, recovering their residual heat; at least one regenerative-type burner (5) is provided with at least one regenerative exchanger which is connected to the region, is associable with at least one intake (7) for comburent air and with at least one outlet (8) for the cold exhaust gases, and is adapted to be crossed alternately by the exhaust gases of the region, accumulating their residual heat, and by the incoming comburent air, transferring the accumulated heat thereto.

## Description

The present invention relates to a continuous kiln, particularly for ceramic articles.

Continuous kilns with a rectilinear tunnel are known in which the ceramic articles to be fired advance on conveyance means such as, for example, a bed of motorized rollers.

Along the length of an individual kiln there is a sequence of a plurality of article processing regions, which can be distinguished schematically into a pre-kiln region, a preheating region, a high-temperature firing region, a quick cooling region, and a slow cooling region; the treatment temperatures of each region and the time required by the articles to pass through them depend on the nature and type of such articles.

The preheating and firing regions are provided with burners; in the first region, the articles are gradually heated, while in the second region, where a larger number of burners is concentrated, the maximum treatment temperature is reached and is kept substantially constant over a preset portion of the length of the kiln; the values of the temperature vary, as a rough indication, over a range between 800 and 1300°C depending on the type of material of which the articles are made.

The pre-kiln region is heated by the combustion products that arrive from the subsequent preheating and firing regions and are aspirated by exhaust gas evacuation fans, which send the aspirated exhaust gases to a stack located proximate to the inlet of the articles to be fired.

The quick cooling region has at least one initial portion for the so-called direct cooling, in which air drawn from the outside environment is introduced directly inside the kiln and, after making contact with the articles and cooling them, is discharged into the atmosphere; the direct-cooling portion is followed by a portion for indirect cooling by means of heat exchangers.

The burners currently in use include those with premixing of the fuel and of the comburent air, which is aspirated, and those of the forced-draft air type, which include the so-called "high-speed" burners.

Premixing burners are substantially composed of a nozzle for the inflow of the fuel, an opening for introducing the comburent air, a duct for mixing the fuel and the air, and an outlet beyond which the mixture ignites and the flame is generated; the incoming fuel generates a negative pressure, which draws air.

In high-speed burners, the air is not aspirated but blown; such burners have a mixing duct, in which the fuel and the comburent air are injected and forced under pressure, and a combustion chamber, in which the mixture burns: the combustion gases produced in the combustion chamber exit from the burner through a nozzle, which introduces them directly in the kiln.

These known types of continuous kiln are not devoid of drawbacks, including the fact that they do not utilize fully the heat of the combustion gases of the burners, they require the injection, in the direct-cooling region, of air drawn from the outside environment, they are crossed at the contiguous firing and direct-cooling regions by large volumes of exhaust gases constituted both by the combustion gases of the burners and by the ambient air for cooling, and have disadvantageously high energy consumptions due to heat losses, to the ambient air injection systems, and to the systems for aspirating and evacuating the volumes of gas to be discharged.

In order to obviate these drawbacks, it is known to provide continuous kilns with burners that have a unit for recovering the heat of the exhaust gases; such unit is used to preheat the incoming comburent air.

These burners comprise a combustion chamber into which a cylinder leads; such cylinder is designed to guide the incoming air and is arranged coaxially and internally with respect to a pipe for the outflow of the exhaust gases; the annular chamber formed between the cylinder and the pipe is divided by a heat exchanger into an outer chamber, through which the exhaust gases of the region flow, and an inner chamber, through which the incoming air flows; the two separate fluids flow continuously and in countercurrent, striking the opposite walls of the exchanger through which they exchange heat.

The burners are further provided with a fuel intake duct, which is arranged coaxially inside the air guiding cylinder and leads into the combustion chamber.

However, even these known types of continuous kiln with heat-recovering burners have a very high energy consumption and are susceptible of further improvements.

The aim of the present invention is to eliminate the above noted drawbacks of known types of continuous kiln by providing a continuous kiln, particularly for ceramic articles, that allows to increase the utilization of the heat of the combustion gases of the burners, to limit the injection, in the direct-cooling region, of air drawn from the outside environment, to reduce the volumes of gas to be discharged that pass through the kiln at the contiguous firing and direct-cooling regions, to limit the losses of heat and to contain the energy consumption of the systems for aspirating and evacuating the gases to be discharged.

Within this aim, an object of the present invention is to provide a structure that is simple, relatively easy to provide in practice, safe in use, effective in operation, and relatively low in cost.

This aim and this and other objects that will become better apparent hereinafter are achieved by the present continuous kiln, particularly for ceramic articles, comprising a firing region provided with a plurality of burners, characterized in that at least one of said burners is of the regenerative type with heat recovery of the exhaust gases of said firing region and is adapted to introduce in said firing region hot combustion gases and to aspirate from said firing region said exhaust gases, recovering their residual heat, said at least one regenerative-type burner being provided with at least one regenerative exchanger which is connected to said region, is associable with at least one intake for comburent air and with at least one outlet for the cold exhaust gases, and is adapted to be crossed alternately by the exhaust gases of said region, accumulating their residual heat, and by the incoming comburent air, transferring the accumulated heat thereto.

Further characteristics and advantages of the present invention will become better apparent from the detailed description of a preferred but not exclusive embodiment of a continuous kiln, particularly for ceramic articles, illustrated only by way of non-limitative example in the accompanying drawings, wherein:
Figure 1 is a schematic chart of a thermal treatment curve provided in a continuous kiln according to the invention;
Figure 2 is a schematic plan view of the kiln that corresponds to the chart of Figure 1;
Figure 3 is a schematic enlarged-scale sectional view of a detail of the kiln of Figure 2 in a first operating configuration;
Figure 4 is a schematic sectional view of the detail of Figure 3 in a second operating configuration.

With reference to the figures, the reference numeral 1 generally designates a continuous kiln particularly for ceramic articles.

The kiln 1 is of the type with a rectilinear tunnel and has, along its length L, a sequential arrangement formed by a pre-kiln region A, in which the unfired articles to be fired enter, a preheating region B, a firing region C, at least one rapid cooling region R1, and at least one slow cooling region R2 from which the fired articles exit; the direction of advancement of the articles is indicated by the dashed arrows F.

The expression "firing region" C is understood to designate the region of the kiln 1 at which the articles are subjected, for a preset time, to the maximum treatment temperatures, which are kept at substantially constant values.

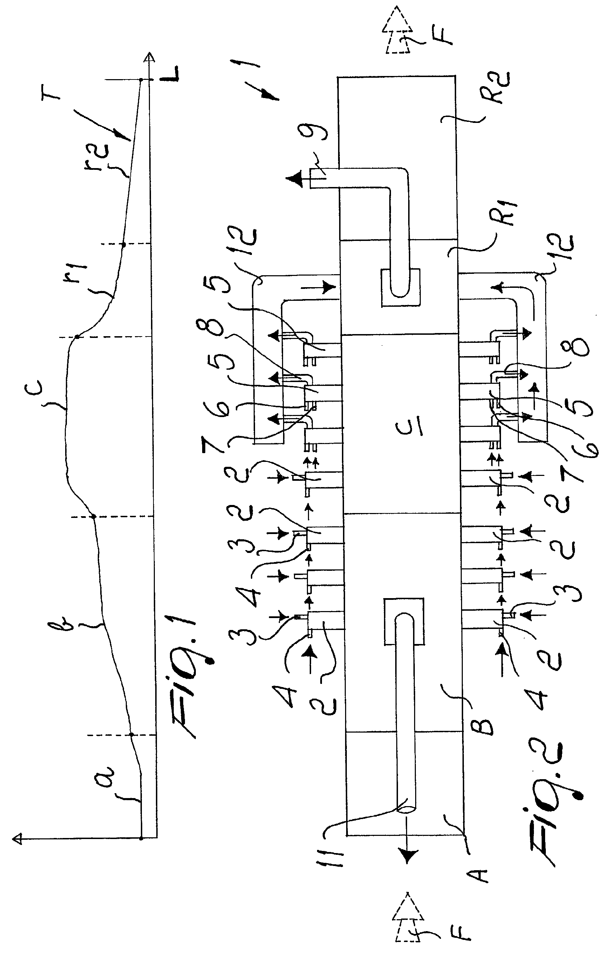

Figure 1 is an exemplifying chart of the curve T of the thermal treatment performed in the kiln 1, which plots the length of the kiln on the axis of the abscissae and the average values of the temperature reached inside the various regions of the kiln 1 on the axis of the ordinates.

The portions of the curve T that are designated respectively by a, b, c, r1 and r2 correspond to the regions of the kiln 1.

The preheating region B is provided with a plurality of burners 2, which are usually used in the ceramics sector and are distributed along its length so that the temperature inside such region rises gradually according to the corresponding portion b of the curve T; for example, the temperature rises from an initial value that can vary between 200 and 300°C to a final value that can vary between 800 and 900°C.

The burners 2 have a duct 3 for supplying the comburent air and a duct 4 for supplying the fuel, and affect the articles either with their flame or with the combustion gases.

The firing region C is provided with a plurality of regenerative-type burners 5 with heat recovery of exhaust gases, which are distributed along the length of region C; the regenerative burners 5 advantageously operate at temperatures higher than a minimum operating temperature that lies between 800 and 1300°C.

Conveniently, the firing region C is also provided with conventional burners 2.

Each regenerative burner 5 comprises at least one and preferably a plurality of regenerative exchangers with periodically complementary operation, which are distributed radially around the body of the burner 5, are connected to the firing region C, and are associable with an intake for comburent air and with an outlet for the cold exhaust gases.

Each regenerative exchanger is constituted by stacked lamination packs, between which channels remain; the hot exhaust gases of the firing region C and the incoming cold comburent air alternately flow through such channels.

Initially, the hot exhaust gases that arrive from the firing region C flow between the laminations, and heat accumulates in the exchanger; then the exchanger is crossed by the incoming cold air, to which the accumulated heat is transferred; the exhaust gases are therefore cold when they exit from the regenerative burner 5, while the incoming comburent air is preheated.

The regenerative exchangers with which the individual regenerative burner 5 is provided have a periodically complementary operation, i.e., while some of them are being crossed by the hot exhaust gases that arrive from the firing region C, the remaining exchangers are crossed by the incoming cold comburent air, and vice versa.

The reference numeral 6 designates the fuel supply duct, the reference numeral 7 designates the comburent air supply duct, and the reference numeral 8 designates the duct for the discharge of the cold exhaust gases of the regenerative burners 5.

As an alternative, each regenerative burner 5 is provided with a single regenerative exchanger with alternating operation: in a first step, the exchanger is crossed by the hot exhaust gases that arrive from the firing region C and recovers and accumulates their residual heat; in a second step, the exchanger is crossed by the incoming cold comburent air, to which it transfers the previously accumulated heat.

In this last case, the kiln 1 is provided with pairs of regenerative burners 5, the burners of each pair having a periodically complementary operation: one burner introduces in the firing region C the hot combustion gases, and its respective regenerative exchanger is crossed by the incoming comburent air, to which it transfers heat, while the other burner draws the exhaust gases from the firing region C and its respective regenerative exchanger is crossed by said exhaust gases, from which it removes heat, accumulating it, and vice versa.

The firing region C corresponds to the portion c of the curve T, whose trend is substantially constant with an average temperature value between 800 and 1300°C.

The cold exhaust gases that exit from the ducts 8 have an average temperature between 100 and 300°C.

The rapid direct-cooling region R1 is conveniently supplied with the cold exhaust gases discharged by the outlet ducts 8 of the regenerative burners 5; the cold exhaust gases are therefore recirculated inside the kiln 1 and replace the cooling air that in known kilns is drawn from the outside environment and injected into said region R1.

The volumes of the gases that circulate in the regions C and R1 of the kiln 1 are therefore modest and reduced with respect to the volumes of the gases that circulate in the same regions of conventional kilns.

The cold exhaust gases introduced in the region R1 strike the material, absorbing its heat, and are then evacuated by an aspirator system 9, which sends them to a dryer or stack, which are not shown since they are of a known type.

The pre-kiln region A is heated by the exhaust gases of the preheating region B, which are recovered by an aspirator system 10 and sent to a stack 11 to be released into the atmosphere.

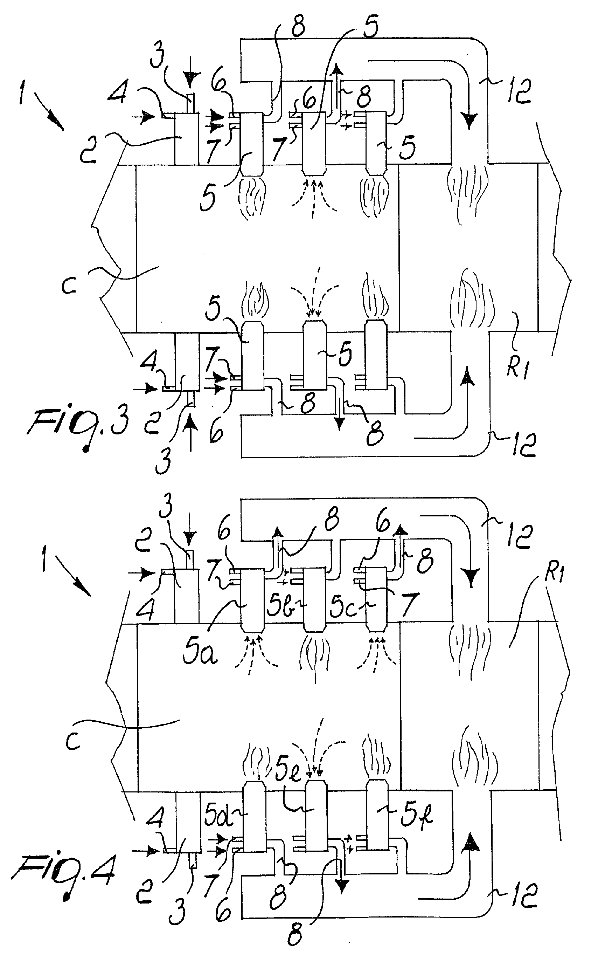

Figure 3 illustrates the firing region C and the rapid cooling region R1 in a first operating configuration, in which each regenerative burner 5 is of the type that comprises a plurality of regenerative exchangers with periodically complementary operation; each regenerative burner 5 therefore operates independently of the similar regenerative burners 5 that are located proximate to it.

Figure 4 illustrates the firing region C and the rapid cooling region R1 in a second alternative operating configuration, in which the regenerative burners 5 are of the type with a single regenerative exchanger and operate alternately in pairs complementarily with respect to each other; in particular, the regenerative burners 5a, 5b and 5c, distributed on one side of the region C, operate alternately and complementarily with respect to the regenerative burners 5d, 5e and 5f distributed on the opposite side of the region C.

For example, when the regenerative burner 5a (5b or 5c) is aspirating the exhaust gases from the firing region C and the respective exchanger is crossed by such exhaust gases, the opposite regenerative burner 5d (5e and 5f) coupled thereto is in the step for emitting the exhaust gases and its respective exchanger is crossed by the inflowing comburent air, and vice versa.

Furthermore, the reference numeral 12 designates a manifold for collecting the cold exhaust gases emitted by the regenerative burners 5 and sent to supply the region R1.

In practice it has been found that the described invention achieves the intended aim and objects, i.e., to provide a continuous kiln that has a low energy consumption and allows to reduce the gas volumes present therein.

The kiln according to the invention in fact uses regenerative-type heat-recovery burners to recover the residual heat of the exhaust gases of the firing region and to use the cold exhaust gases that exit from them to cool the articles in the direct-cooling region without having to introduce cold air drawn from the outside environment.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. MO2000A000252 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A continuous kiln (1), particularly for ceramic articles, comprising a firing region (C) provided with a plurality of burners (5), **characterized in that** at least one of said burners (5) is of the regenerative type with heat recovery of the exhaust gases of said firing region (C) and is adapted to introduce in said firing region (C) hot combustion gases and to aspirate from said firing region (C) said exhaust gases, recovering their residual heat, said at least one regenerative-type burner (5) being provided with at least one regenerative exchanger which is connected to said region, is associable with at least one intake (7) for comburent air and with at least one outlet (8) for the cold exhaust gases, and is adapted to be crossed alternately by the exhaust gases of said region, accumulating their residual heat, and by the incoming comburent air, transferring the accumulated heat thereto.

2. The kiln according to claim 1, **characterized in that** it comprises at least one cooling region (R1, R2) located downstream of said firing region and supplied with said cold exhaust gases that exit from said at least one regenerative-type burner.

3. The kiln according to one or more of the preceding claims, **characterized in that** said firing region (C) comprises at least one pair of said regenerative-type burners (5) with periodically complementary operation, one burner being adapted to introduce in said firing region (C) the hot combustion gases, the respective regenerative exchanger being crossed by the incoming comburent air, the other burner being adapted to aspirate said exhaust gases from said firing region (C), the respective regenerative exchanger being crossed by said exhaust gases, and to supply said cooling region (R1, R2) with the cold exhaust gases that exit from it and/or vice versa.

4. The kiln according to one or more of the preceding claims, **characterized in that** said regenerative-type burners (5) operate at temperatures that are higher than a preset minimum temperature.

5. The kiln according to one or more of the preceding claims, **characterized in that** said minimum temperature is in the range between 800 and 1300°C.

6. The kiln according to one or more of the preceding claims, **characterized in that** said cold exhaust gases have an average temperature between 100 and 300°C.

7. The kiln according to one or more of the preceding claims, **characterized in that** said regenerative-type burner (5) comprises at least one first said regenerative exchanger and one second said regenerative exchanger with periodically complementary operation, the first exchanger being crossed by said exhaust gases and the second exchanger being crossed by said incoming comburent air, and vice versa.

8. The kiln according to one or more of the preceding claims, **characterized in that** said plurality of burners (5) is constituted exclusively by said regenerative-type burners.
